# EUROPEAN PATENT APPLICATION

(11) **EP 4 549 242 A1**
(43) Date of publication of application: **07.05.2025**
(21) Application number: 24209580.0
(22) Date of filing: 29.10.2024
(51) Int. Cl.: B60N 2/90, F16K 7/07, F16K 31/126

(54) **VEHICLE SEAT MASSAGE SYSTEM UTILIZING PINCH VALVES**

(30) Priority: 02.11.2023 US 202363595358 P; 01.08.2024 US 202418792044
(71) Applicant: Lear Corporation, Southfield, MI 48033 (US)
(72) Inventor: ABDELLA, David, Michigan 48073 (US); BLAIR, Samuel, Michigan 48083 (US)
(74) Representative: Haseltine Lake Kempner LLP

(57) **Abstract**

An assembly includes at least one control fluid line (34), at least one bladder fluid line (26) connectable to at least one bladder (18); and at least one pinch valve (42) associated with the at least one bladder fluid line. The at least one pinch valve is selectively moveable to a bladder inflation position based on a pressure in the at least one control fluid line.

## Description

### RELATED APPLICATIONS

This application claims the benefit of U.S. Provisional Application No. 63/595,358, filed November 2, 2023 and U.S. Non-Provisional Application No. 18/791,044, filed on 1 August 2024, the entirety of which are herein incorporated by reference.

### TECHNICAL FIELD

The present disclosure relates to a vehicle seat with a massage system. More particularly, it relates to a vehicle seat with an air distribution network that utilizes pinch valves.

### BRIEF DESCRIPTION OF THE DRAWINGS

FIG. 1 is a schematic illustration of a vehicle seat with a massage system.
FIG. 2 is a schematic illustration of an air distribution network suitable for use in the vehicle seat of FIG. 1.
FIG. 3A and 3B are cross sectional views of pinch valve suitable for use in the distribution network of FIG. 3.
FIG. 4 is a cross section of an alternative pinch valve suitable for use in the distribution network of FIG. 2.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well- known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundary less terms, and should be interpreted consistent with the way one skilled in the art would interpret those terms.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

Except in the examples, or where otherwise expressly indicated, all numerical quantities in this description indicating amounts of material or conditions of reaction and/or use are to be understood as modified by the word "about" in describing the broadest scope of the invention. The term "substantially," "generally," or "about" may be used herein and may modify a value or relative characteristic disclosed or claimed. In such instances, "substantially," "generally," or "about" may signify that the value or relative characteristic it modifies is within± 0%, 0.1%, 0.5%, 1%, 2%, 3%, 4%, 5% or 10% of the value or relative characteristic. Practice within the numerical limits stated is generally preferred.

It should also be appreciated that integer ranges (e.g., for measurements or dimensions) explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. In the specific examples set forth herein, concentrations, temperature, and reaction conditions (e.g. pressure, pH, flow rates etc.) can be practiced with plus or minus 50 percent of the values indicated rounded to three significant figures. In a refinement, concentrations, temperature, and reaction conditions (e.g., pressure, pH, flow rates, etc.) can be practiced with plus or minus 30 percent of the values indicated rounded to three significant figures of the value provided in the examples. In another refinement, concentrations, temperature, and reaction conditions (e.g., pressure, pH, flow rates, etc.) can be practiced with plus or minus 10 percent of the values indicated rounded to three significant figures of the value provided in the examples.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

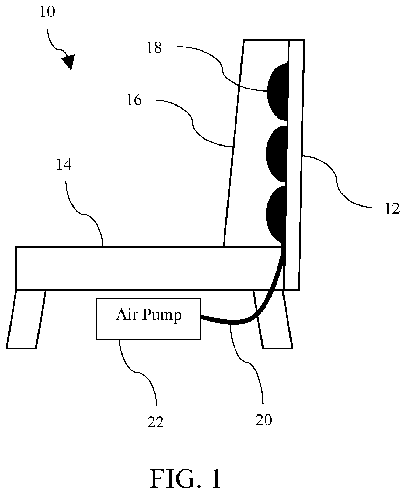

Figure 1 illustrates a vehicle seat 10. The seat includes a frame 12 which supports a bottom cushion 14 and a back cushion 16. In one example, the bottom cushion 14 is mountable to a fixed vehicle structure and is adjustable in a plurality of different directions, e.g., fore/aft, up/down. In one example, the back cushion 16 is supported in an upright position relative to the bottom cushion 14, and is adjustable in a plurality of different directions, e.g., fore/aft, up/down, tilt. A set of massage bladders 18 is located between the frame and one or more of the cushions 14, 16. An air distribution network 20 selectively distributes air from an air pump 22, e.g., a fluid supply, to a subset of the massage bladders and selectively releases air from the massage bladders. An occupant seated in the vehicle seat is able to feel the inflating and deflating massage bladders through the seat cushion.

In implementations, the air distribution network 20 includes a number of valves which control which massage bladders are beings inflated and/or deflated at any given time. In a conceptually simple network, there may be one valve dedicated to each massage bladder. However, as the number of massage bladders increases, it becomes beneficial to multi- plex the valves such that fewer valves are required.

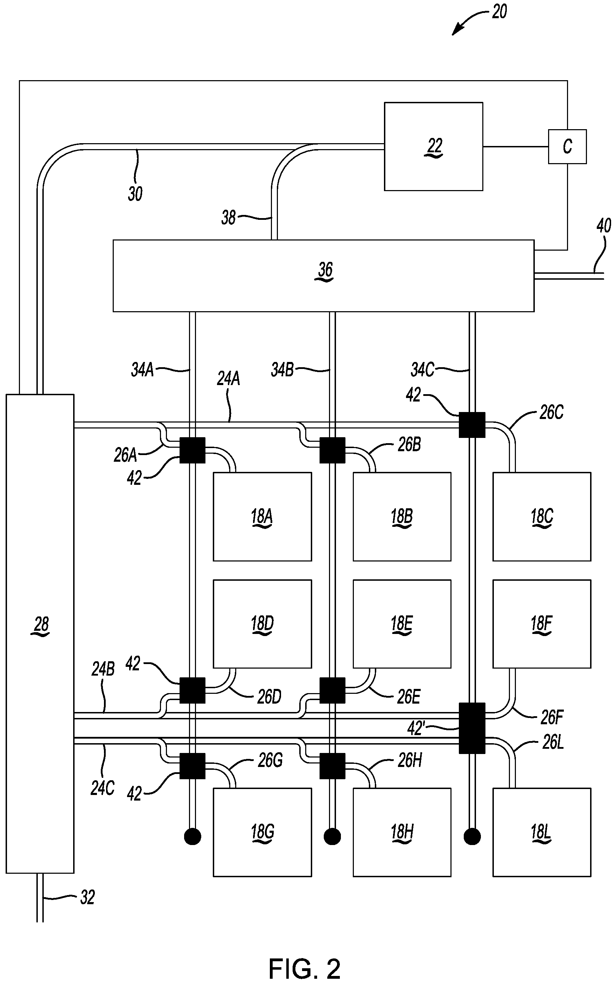

Figure 2 illustrates an exemplary air distribution network. This network is used to distribute air to nine different massage bladders labeled 18A-18L. In implementations, three fluid lines 24A, 24B, and 24C are utilized to route the air to the nine bladders. In one example, fluid line 24A has three branches 26A, 26B, and 26C which route air from fluid line 24A to massage bladders 18A, 18B, and 18C respectively. Similarly, fluid lines 24B and 24C each have three branches which are fluidly connected to respective massage bladders.

In implementations, a first valve network 28 receives a flow of air from air pump 22 via line 30 and selectively routes the air to a subset of the fluid lines 24A, 24B, and 24C. In some embodiments, at most one fluid line will receive a flow of air via valve network 28 at any given time. Valve network 28 may also vent, via line 32, some or all of the fluid lines that are not currently receiving air flow from pump 22. For example, valve network 28 may include three binary valves, one for each fluid line. Each valve may be controlled by one electrical signal, such as a current, from a controller C. Each valve may route air flow to the respective fluid line when the electrical signal is present and vent the respective fluid line when the electrical signal is absent. Other valve structures which may require fewer than three distinct valves and fewer than three distinct electrical signals are also contemplated.

In implementations, three logic lines 34A, 34B, and 34C are utilized to further select which of the nine massage bladders are inflated and/or deflated at any given time.

In implementations, a second valve network 36 receives pressurized air from air pump 22 via line 38 and selectively routes the air to a subset of the logic lines 34A, 34B, and 34C. In some embodiments, at most one logic line will be pressurized via valve network 36 at any given time. Valve network 36 may also vent, via line 40, some or all of the logic lines that are not currently pressurized. As with first valve network 28, a variety of valve structures are contemplated for second valve network 36, including dedicated valves and multiplexed structures.

In implementations, a number of pinch valves 42 selectively pinch particular branches 26 based on whether or not a particular logic line 34 is currently pressurized. For example, the pinch valve may pinch the branch of the fluid line when the logic line is not pressurized and not pinch the branch when the logic line is pressurized. In other embodiments, pressure in the logic line may cause the pinch valve to pinch the branch while the absence of pressure causes the pinch valve to not pinch the branch. When a branch is pinched, flow of air to or from the respective massage bladder is prevented. A possible structure for these pinch valves will be described below. Pinch valves are typically much cheaper than the valves that are included in valve networks 28 and 36, so the number of pinch valves is not as important as the number of conventional valves.

As an example, to route air to only massage bladder 18B, valve network 28 would be controlled to route air flow to fluid line 24A but to not route air to fluid lines 24B or 24C. Fluid lines 24B and 24C may be vented. Valve network 36 is controlled to pressurize the logic lines such that the branches associated with massage bladders 18A and 18C are pinched and the branch associated with massage bladder 18B is not pinched. Although the network of Figure 2 has three fluid lines and three logic lines, the number of fluid lines and logic lines can vary and not necessarily be equal to one another. In general, with M fluid lines and N logic lines, up to MxN massage bladders can be independently inflated or deflated.

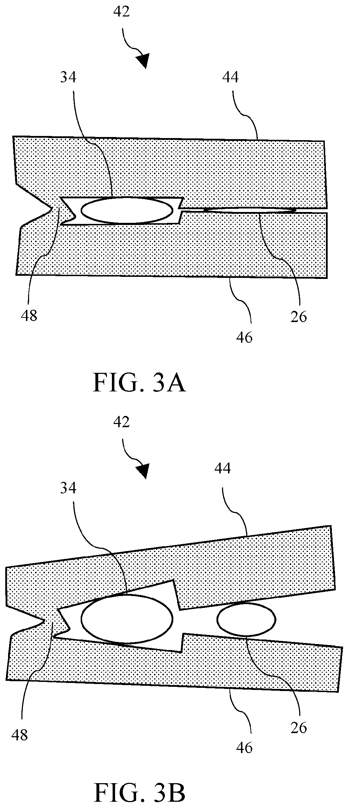

Figures 3A and 3B show a cross section of an exemplary pinch valve suitable for use in the air distribution network 20 of Figure 2. Figure 3A shows the pinch valve 42 in a closed, e.g., pinched, condition while Figure 3B shows the pinch valve in an open, e.g., not pinched, position. The pinch valve includes two prongs 44 and 46 joined to one another by a hinge joint 48. The hinge joint 48 is in a pre-loaded position with the prongs being held tightly against one another as shown in Figure 3A. One of the logic lines 34 and at least one of the branches 26 are positioned between the two prongs. When logic line 34 is not pressurized, the prongs pinch the branch 26 preventing the flow of air through the branch. When the logic line 34 is pressurized, it pushes the prongs apart, as illustrated in Figure 3B, such that the branch is not pinched and air may flow though the branch.

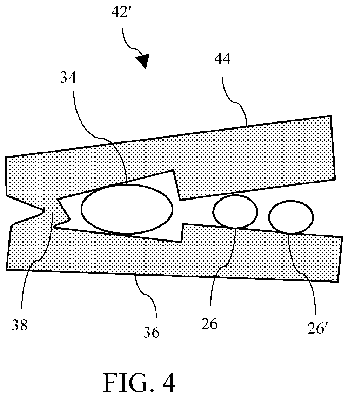

Figure 4 illustrates a pinch valve 42' with two branches 26 and 26' between the prongs. The branches may be associated with different fluid lines. When logic line 34 is not pressurized, both branches 26 and 26' are pinched. When logic line 34 is pressurized, both branches 26 and 26' are not pinched. Other pinch valve configurations are also contemplated, such as a configuration where the logic lines and at least one of the branches are on opposite sides of the hinge point, such that pressurizing the logic line would pinch the branch and not pressurizing the logic line would not pinch the branch.

In implementations, an assembly includes at least one seat component such as a seat back cushion 16 or a seat bottom cushion 14 that has a plurality of bladder fluid lines 24A-C. In one example, the bladder fluid lines 24A-C comprise tubular members that connect a fluid supply, e.g., a pump 22, to the fluid bladders 18A-18L. In implementations, the plurality of bladders 18A-18L comprise discrete inflatable/deflatable pouches or cells for massage and/or lumbar/bolster seat features that are to be associated with the seat cushion 14, 16. In implementations, there are a plurality of branches 26A-C that are associated with each bladder fluid line 24 A-C. In one example, the branches 26A-C comprise discrete inflatable/deflatable tubular connectors fluidly connecting a bladder line to a bladder. In implementations, each branch 26A-C fluidly connects one bladder, respectively bladders 18A-C, to an associated bladder fluid line 24A. Bladder fluid line 24B also has branches 36D-F that connect the fluid line 24B to each of bladders 18D-F. Bladder fluid line 24C also has branches 26G, H, L that connect the fluid line 24C to each of bladders 18G, H, L.

In implementations, a plurality of control fluid lines 34A-C are associated with the plurality of bladder fluid lines 24A-C. In one example, the control fluid lines 34A-C comprise logic, e.g., control, lines that comprises tubular members that adjust fluid pressure for the associated bladder lines 24A-C. In implementations, a plurality of pinch valves 42, 42' are associated with the control fluid lines 34A-C and the branches 26A-C. In one example, a pinch valve 42, 42' comprises a pair of members that are hinged together to capture/pinch the associated bladder line and associated branch to a bladder between the members (see Figures 3A-B and 4). In implementations, each pinch valve 42, 42' controls a flow of fluid in one of the branches 26A-C based on a pressure in an associated control fluid line 34A-C.

In implementations, the air distribution network 20 may be associated with multiple valve banks or networks. For example, a first valve network 28 may associated with the plurality of control fluid lines 34A-C and a second valve network 36 may be associated with the plurality of bladder fluid lines 24A-C. In in one example, the first valve network 28 and the second valve network 36 may comprise one or more valves located within a valve housing that control fluid flow. In implementations, the second valve network 36 is independent of the first valve network 28.

In implementations, the first valve network 28 and the second valve network 36 are connectible to a common fluid supply, e.g., a fluid source such as the pump 22.

In implementations, the two valve networks have different purposes. In one example, the first valve network 36 selectively adjusts pressure in the plurality of control fluid lines 34A-C. For example, one or more controllers C controls valves in the associated valve network 36 to supply fluid flow from the pump 22 to a selected control fluid line 34A-C.

In one example, the second valve network 28 selectively connects the plurality of bladder fluid lines 24A-C to the common fluid supply, e.g. the pump 22. For example, the one or more controllers C controls valves in the associated valve network 28 to supply fluid flow to a selected bladder fluid line 24A-C.

In implementations, the one or more controllers C can include a processor, memory, and one or more input and/or output (I/O) device interface(s) that are communicatively coupled via a local interface. The local interface can include, for example but not limited to, one or more buses and/or other wired or wireless connections. The one or more controllers C may be a hardware device for executing software, particularly software stored in memory. The one or more controllers C can be a custom made or commercially available processor, a central processing unit (CPU), an auxiliary processor among several processors associated with the computing device, a semiconductor based microprocessor (in the form of a microchip or chip set) or generally any device for executing software instructions. The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The software in the memory may include one or more separate programs, each of which includes an ordered listing of executable instructions for implementing logical functions. The one or more controllers C can be configured to execute software stored within the memory, to communicate data to and from the memory, and to generally control operations of the computing device pursuant to the software.

In implementations, each pinch valve 42, 42' comprises a first member 44 coupled to a second member 46 at a coupling connection 48. In one example, the first member 44 and the second member 46 comprise prongs, legs, arms, etc. that are hinged together at the coupling connection 48.

In one example, the coupling connection 48 comprises a living hinge connection between members 44, 46.

In implementations, at least one control fluid line 34A-C is capturable, e.g., pinchable, compressible, between the first member 44 and the second member 46.

In implementations, the control fluid line 34A-C is pinched or compressed between the first member 44 and the second member 46 by a biasing force (e.g., biasing hinge force) between the first member 44 and the second member 46. In implementations, each pinch valve 42, 42' moves to the inflation position in response to pressurizing a respective control fluid line 34A-C. For example, and increase or decrease of pressure as applied within the control fluid line to a pressure level that overcomes the biasing force.

In the example shown in Figures 3A-3B, an increase in pressure in a fluid line 34 overcomes the biasing force of the hinge connection 48 to open the pinch valve 42 to allow the branch 26 to inflate as shown in Figure 3B.

In implementations, each control fluid line 34A-C is associated with each of the bladder fluid lines 24A-C in sequence, e.g., along an axial, linear path from one bladder fluid line to the next. Each control fluid line 34A-C passes sequentially, e.g., one-by-one in order, through pinch valves 42 on the branches 26 associated with each control fluid line 34.

In implementations, each pinch valve 42, 42' cooperates with an associated control fluid line 34A-C, and pressurization of the associated control fluid line controls inflation of an associated bladder by opening or closing an associated branch. For example, the first 44 and second 46 members move away from each other to allow an associated branch tube to inflate, and the first 44 and second 46 members move toward each other to cut off fluid flow to bladder by compressing the branch 26..

Figure 4 shows an example of a pinch valve 42' with one control fluid line 34 being associated with two branch lines 26, 26'. In one example, the pinch valve 42' is used for control fluid line 34C and branches 26F and 26L for associated bladders 18F and 18L.

In implementations, an open cross-section of a branch 36 is smaller than an open cross-section of a control line 34.

In implementations an assembly may include: at least one control fluid line; at least one bladder fluid line connectable to at least one bladder; and at least one pinch valve associated with the at least one bladder fluid line, the at least one pinch valve selectively moveable to a bladder inflation position based on a pressure in the at least one control fluid line.

In implementations, the assembly may include any of the following either alone or in any combination. In one example, the assembly may include at least one first valve network associated with the at least one control fluid line and at least one second valve network associated with the at least one bladder fluid line.

In one example, the assembly may include the at least one first valve network and the at least one second valve network being connectible to a common fluid supply.

In one example, the assembly may include the at least one first valve network selectively adjusting pressure in the at least one control fluid line; and the at least one second valve network selectively connecting the at least one bladder fluid line to the common fluid supply.

In one example, the assembly may include the at least one pinch valve comprising a first member coupled to a second member with the at least one control fluid line being capturable between the first member and the second member.

In one example, the assembly may include the at least one control fluid line being pinched between the first member and the second member by a biasing force of the first member relative to the second member, and wherein the at least one pinch valve moves to the bladder inflation position in response to pressurizing the at least one control fluid line to a pressure level that overcomes the biasing force.

In one example, the assembly may include a seat cushion associated with the at least one bladder.

In one example, the assembly may include the at least one control fluid line comprising a plurality of control fluid lines; the at least one bladder fluid line comprising a plurality of bladder fluid lines; and the at least one pinch valve comprising a plurality of pinch valves, wherein at least one pinch valve is associated with each control fluid line.

In one example, the assembly may include the at least one bladder comprising a plurality of bladders, and wherein: each bladder fluid line includes a subset of bladders from the plurality of bladders; each bladder fluid line includes a branch associated with each bladder of the subset of bladders; and each branch includes at least one pinch valve of the plurality of pinch valves, and wherein pressurization of the control fluid line associated with each branch controls opening and closing of an associated branch.

In implementations an assembly may include: at least one seat component; a plurality of bladder fluid lines connectable to a plurality of bladders associated with the at least one seat component, wherein each bladder is movable between an inflation position and a deflation position; a plurality of branches associated with each bladder fluid line, wherein each branch fluidly connects one bladder of the plurality of bladders to a bladder fluid line of the plurality of bladder fluid lines; a plurality of control fluid lines associated with the plurality of bladder fluid lines; and a plurality of pinch valves, wherein each pinch valve controls a flow of fluid in one of the branches based on a pressure in an associated control fluid line of the plurality of control fluid lines.

In one example, the assembly may include at least one first valve network associated with the plurality of control fluid lines and at least one second valve network associated with the plurality of bladder fluid lines.

In one example, the assembly may include the at least one first valve network and the at least one second valve network being connectible to a common fluid supply.

In one example, the assembly may include the at least one first valve network selectively adjusting pressure in the plurality of control fluid lines; and the at least one second valve network selectively connecting the plurality of bladder fluid lines to the common fluid supply.

In one example, the assembly may include each pinch valve comprising a first member coupled to a second member with at least one control fluid line being capturable between the first member and the second member.

In one example, the assembly may include the at least one control fluid line being pinched between the first member and the second member by a biasing force of the first member relative to the second member, and wherein each pinch valve moves to the inflation position in response to pressurizing the at least one control fluid line to a pressure level that overcomes the biasing force.

In one example, the assembly may include each control fluid line being associated with each of the bladder fluid lines in sequence, and wherein each control fluid line passes sequentially through pinch valves on the branches associated with each control fluid line.

In one example, the assembly may include each pinch valve cooperating with an associated control fluid line, and wherein pressurization of the associated control fluid line controls inflation of an associated bladder by opening or closing an associated branch.

In implementations, a method may include: connecting at least one bladder fluid line to at least one bladder via a branch; associating a pinch valve with each branch; and adjusting pressure within a control fluid line to open the at least one pinch valve and inflate the at least one bladder.

In implementations, the method may include any of the following either along or in any combination. The method may include selectively adjusting pressure in the at least one control fluid line via at least one first valve network, and selectively connecting the at least one bladder fluid line to a fluid supply with at least one second valve network.

The method may include each pinch valve comprising a first member coupled to a second member, and including pinching the at least one control fluid line between the first member and the second member via a biasing force of the first member relative to the second member, and moving each pinch valve to a bladder inflation position in response to pressurizing the at least one control fluid line to a pressure level that overcomes the biasing force.

Other aspects of an assembly may include any of the following either alone or in any combination.

Aspect 1. An assembly including a logic line, a fluid line for fluid connection to a bladder, and a pinch valve. The pinch valve controls a flow of fluid in the fluid line based on a pressure in the logic line.

Aspect 2. The assembly of aspect I wherein the pinch valve controls the flow of fluid in the fluid line by either pinching or not pinching the fluid line based on the pressure in the logic line.

Aspect 3. The assembly of aspect 2 wherein the pinch valve includes two prongs hinged to one another and spring loaded to pinch the fluid line, and the logic line runs between the two prongs such that pressure in the line acts against the spring load.

Aspect 4. The assembly of aspect I further including a bladder fluidly connected to the fluid line.

Aspect 5. The assembly of aspect I further including a cushion adjacent to the bladder such that inflation and deflation of the bladder provides a massage sensation on a side of the cushion opposite the bladder.

Aspect 6. The assembly of aspect I further including a first valve which adjust the pressure the logic lines, and a second valve which selectively connects the fluid line to a source of fluid flow.

Aspect 7. The assembly of aspect 6 further including an air pump which provides pressurized air to the first valve and also serves as the source of fluid flow to the fluid line.

Aspect 8. The assembly of aspect 6 wherein the second valve also selectively vents the fluid line.

Aspect 9. An assembly including one or more logic lines, one or more fluid lines, a plurality of pinch valves, and a plurality of valves. Each of the fluid lines includes one or more branches. Each pinch valve controls a flow of fluid in one or more of the branches based on a pressure in a logic line of the one or more logic lines. One or more of the valves adjust the pressure in each of the logic lines. One or more of the valves selectively connect each of the fluid lines to a source of fluid flow.

Aspect 10. The assembly of aspect 9 wherein each of the pinch valves includes two prongs hinged to one another and spring loaded to pinch the one or more branches, and the logic line runs between the two prongs such that pressure in the line acts against the spring load.

Aspect 11. The assembly of aspect 9 wherein a logic line of the one or more logic lines passes sequentially through more than one of the pinch valves.

Aspect 12. The assembly of aspect 9 wherein more than one branch is selectively pinched by one of the pinch valves.

Aspect 13. The assembly of aspect 9 further including a plurality of bladders, each bladder fluidly connected to one of the branches, and a cushion adjacent to the bladders such that inflation and deflation of the bladders provides a massage sensation on a side of the cushion opposite the bladders.

Aspect 14. The assembly of aspect 9 further including an air pump which provides pressurized air to the valves which adjust pressure in the logic lines and also serves as the source of fluid flow to the fluid lines.

Aspect 15. The assembly of aspect 9 wherein the one or more logic lines includes a plurality of logic lines.

Aspect 16. The assembly of aspect 9 wherein the one or more fluid lines includes a plurality of fluid lines.

Aspect 17. An assembly including a seat cushion, a plurality of logic lines, a plurality of fluid lines, a plurality of bladders, and a plurality of pinch valves. Each of the plurality of fluid lines have a plurality of branches. The bladders are adjacent to the seat cushion. Each bladder is fluidly connected to one of the branches. Each pinch valve controls a flow of fluid in one or more of the branches based on a pressure in a logic line of the plurality of logic lines.

Aspect 18. The assembly of aspect 17 further including one or more valves which adjust the pressure in each of the logic lines.

Aspect 19. The assembly of aspect 17 further including one or more valves which selectively connect each of the fluid lines to a source of fluid flow.

Aspect 20. The assembly of aspect 19 wherein the one or more valves also selectively vent each of the fluid lines.

Further aspects are also contemplated, consistent with the above disclosed embodiments and their combinations.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. An assembly comprising:
at least one control fluid line;
at least one bladder fluid line connectable to at least one bladder; and
at least one pinch valve associated with the at least one bladder fluid line, the at least one pinch valve selectively moveable to a bladder inflation position based on a pressure in the at least one control fluid line.

2. The assembly of claim 1, including at least one first valve network associated with the at least one control fluid line and at least one second valve network associated with the at least one bladder fluid line; and
optionally, wherein the at least one first valve network and the at least one second valve network are connectible to a common fluid supply; and
optionally, wherein:
the at least one first valve network selectively adjusts pressure in the at least one control fluid line; and
the at least one second valve network selectively connects the at least one bladder fluid line to the common fluid supply.

3. The assembly of claim 1 or claim 2, wherein the at least one pinch valve comprises a first member coupled to a second member with the at least one control fluid line being capturable between the first member and the second member.

4. The assembly of claim 3, wherein the at least one control fluid line is pinched between the first member and the second member by a biasing force of the first member relative to the second member, and wherein the at least one pinch valve moves to the bladder inflation position in response to pressurizing the at least one control fluid line to a pressure level that overcomes the biasing force.

5. The assembly of any preceding claim, including a seat cushion associated with the at least one bladder.

6. The assembly of any preceding claim, wherein:
the at least one control fluid line comprises a plurality of control fluid lines;
the at least one bladder fluid line comprises a plurality of bladder fluid lines; and
the at least one pinch valve comprises a plurality of pinch valves, wherein at least one pinch valve is associated with each control fluid line.

7. The assembly of claim 6, wherein the at least one bladder comprises a plurality of bladders, and wherein:
each bladder fluid line includes a subset of bladders from the plurality of bladders;
each bladder fluid line includes a branch associated with each bladder of the subset of bladders; and
each branch includes at least one pinch valve of the plurality of pinch valves, and wherein pressurization of the control fluid line associated with each branch controls opening and closing of an associated branch.

8. An assembly comprising:
at least one seat component;
a plurality of bladder fluid lines connectable to a plurality of bladders associated with the at least one seat component, wherein each bladder is movable between an inflation position and a deflation position;
a plurality of branches associated with each bladder fluid line, wherein each branch fluidly connects one bladder of the plurality of bladders to a bladder fluid line of the plurality of bladder fluid lines;
a plurality of control fluid lines associated with the plurality of bladder fluid lines; and
a plurality of pinch valves, wherein each pinch valve controls a flow of fluid in one of the branches based on a pressure in an associated control fluid line of the plurality of control fluid lines.

9. The assembly of claim 8, including at least one first valve network associated with the plurality of control fluid lines and at least one second valve network associated with the plurality of bladder fluid lines; and
optionally, wherein the at least one first valve network and the at least one second valve network are connectible to a common fluid supply; and
optionally, wherein:
the at least one first valve network selectively adjusts pressure in the plurality of control fluid lines; and
the at least one second valve network selectively connects the plurality of bladder fluid lines to the common fluid supply.

10. The assembly of claim 8 or claim 9, wherein each pinch valve comprises a first member coupled to a second member with at least one control fluid line being capturable between the first member and the second member; and
optionally, wherein the at least one control fluid line is pinched between the first member and the second member by a biasing force of the first member relative to the second member, and wherein each pinch valve moves to the inflation position in response to pressurizing the at least one control fluid line to a pressure level that overcomes the biasing force.

11. The assembly of any of claims 8 to 10, wherein each control fluid line is associated with each of the bladder fluid lines in sequence, and wherein each control fluid line passes sequentially through pinch valves on the branches associated with each control fluid line.

12. The assembly of any of claims 8 to 11, wherein each pinch valve cooperates with an associated control fluid line, and wherein pressurization of the associated control fluid line controls inflation of an associated bladder by opening or closing an associated branch.

13. A method comprising:
connecting at least one bladder fluid line to at least one bladder via a branch;
associating a pinch valve with each branch; and
adjusting pressure within a control fluid line to open the at least one pinch valve and inflate the at least one bladder.

14. The method of claim 13, including selectively adjusting pressure in the at least one control fluid line via at least one first valve network, and selectively connecting the at least one bladder fluid line to a fluid supply with at least one second valve network.

15. The method of claim 13 or claim 14, wherein each pinch valve comprises a first member coupled to a second member, and including pinching the at least one control fluid line between the first member and the second member via a biasing force of the first member relative to the second member, and moving each pinch valve to a bladder inflation position in response to pressurizing the at least one control fluid line to a pressure level that overcomes the biasing force.
